# EUROPEAN PATENT APPLICATION

(11) **EP 4 579 245 A1**
(43) Date of publication of application: **02.07.2025**
(21) Application number: 24155275.1
(22) Date of filing: 01.02.2024
(51) Int. Cl.: G01N 35/10, B01L 3/00, B01L 3/02

(54) **LABWARE LIFT**

(30) Priority: 27.12.2023 EP 23220391
(71) Applicant: TECAN Trading AG, 8708 Männedorf (CH)
(72) Inventor: BOLLI, Beat, 8708 Männedorf (CH)
(74) Representative: Troesch Scheidegger Werner AG

(57) **Abstract**

A labware lift comprising a head lift (5) mounted on a base plate (40) that extends in a first horizontal direction (X) and in a second horizontal direction (Y) that is perpendicular to the first horizontal direction (X), wherein the head lift (5) comprises a first platform (50) that is movable in a vertical direction (Z) and that is guided by at least one lift rail (42), wherein the at least one lift rail (42) is mounted on one lateral side of the base plate (40) in the first horizontal direction (X), wherein the labware lift further comprising a stack lift (7) mounted on the base plate (40), wherein the stack lift (7) comprises a second platform (70) that is movable in the vertical direction (Z) between the base plate (40) and the first platform (50) and that is guided by the same at least one lift rail (42).

## Description

### TECHNICAL FIELD OF THE INVENTION

The current invention relates to a labware lift, a laboratory apparatus with said labware lift and a method for stacking labware with said labware lift.

### DESCRIPTION OF THE RELATED ART

Known embodiments of such labware lifts are disclosed in WO 2022/010489 A1, wherein one of a first platform of a head lift or a second platform of a labware lift are movable in the vertical direction between a lower position and an upper position. With such a design, it is impossible to automatically stack or unstack labware.

### SUMMARY OF THE INVENTION

It is a task of current invention to provide a labware lift or a labware lift arrangement that allows the automatic stacking and unstacking of labware.

This task is solved by a labware lift with the features of claim 1. Further embodiments of such a labware lift, a laboratory apparatus with such a labware lift, as well as a method for stacking labware with such a labware lift are defined by the features of further claims.

A labware lift according to the invention comprises a head lift mounted on a base plate, wherein the base plate extends in a first horizontal direction and in a second horizontal direction that is perpendicular to the first horizontal direction. The head lift comprises a first platform that is movable in a vertical direction and that is guided by at least one lift rail. The at least one lift rail is mounted on one lateral side of the base plate in the first horizontal direction. The labware lift further comprising a stack lift mounted on the base plate. The stack lift comprises a second platform that is movable in the vertical direction between the base plate and the first platform and is guided by the same at least one lift rail. Such a design allows the automatic stacking and unstacking of labware.

Labware is understood as various types of equipment and containers used in laboratories for scientific experiments, research, and analysis. Labware may also be understood as a rack comprising tubes like test tubes or Solid Phase Extraction (SPE) columns or filter columns arranged in an array. Labware may be all kind of microplates according to ANSI/SLAS standard with 6, 24, 48, 96, 384 or 1536 wells including deep well microplates and microplates for filtration. Labware also includes troughs, Eppendorf tubes and the like. Labware is typically made from materials such as glass, plastic, or metal, depending on the specific requirements of the experiments and the compatibility of the materials with the substances being handled.

In one embodiment, the first platform comprises a front first part with a first gas connection, e.g., for pressurizing a labware, and a back second part with at second gas connection, e.g., for blowing dry gas in labware container for concentrating solutions in the labware container. The second part of the first platform is arranged next to the first part of the first platform in the second horizontal direction.

In one embodiment, the at least one lift rail is arranged on the one lateral side of the base plate in the first horizontal direction and at least one lift rail is arranged on a lateral opposite side thereof. In the case of four lift rails, two lift rails are arranged on the one lateral side of the base plate in the first horizontal direction and two lift rails are arranged on the lateral opposite side thereof.

In one embodiment, a top plate is provided on a side of the at least one lift rail opposite to the base plate, wherein the top plate is parallel to the base plate.

In one embodiment, the head lift comprises at least one first spindle that is arranged on the one lateral side of the base plate in the first horizontal direction and that is operatively connected to a first drive and the stack lift comprises at least one second spindle that is arranged on the one lateral side of the base plate in the first horizontal direction and that is operatively connected to a second drive. The first spindle and the second spindle can be arranged on a single line in the second horizontal direction.

If there are two first spindles, one first spindle is arranged on the one lateral side of the base plate in the first horizontal direction and one first spindle is arranged on the lateral opposite side thereof and if there are two second spindles, one second spindle is arranged on the one lateral side of the base plate in the first horizontal direction and one second spindle is arranged on the lateral opposite side thereof. The first and second spindles on each lateral side can be arranged on a single line in the second horizontal direction.

In one embodiment, a first belt operatively connects all first spindles to the first drive and a second belt operatively connects all second spindles to the second drive. This ensures the synchronization of all first and second spindles.

In one embodiment, the first drive is mounted to the top plate and the second drive is mounted to the top plate. For better accessibility, the belt pulleys together with the belts can be arranged on top of the top plate and to reduce the total height of the labware lift, the first and second drive can be mounted to the top plate from below, while their driving shafts protrude to its opposite side.

In one embodiment, the first spindle and the second spindle are arranged between two lift rails on the one lateral side of the base plate in the first horizontal direction and/or on the lateral opposite side thereof. The spindles and the lift rails on each lateral side can be arranged on a single line in the second horizontal direction.

In one embodiment, the second platform is arranged below the front first part of the first platform in the vertical direction. Alternatively, the second platform is arranged below the back second part of the first platform or below the first part and the second part of the first platform.

In one embodiment, the second platform comprises a shelf for labware that extends parallel to the first horizontal direction and parallel to the second horizontal direction towards a middle plane of the labware lift that is perpendicular to the first horizontal direction, from an inside of the second platform facing the middle plane. With such a design, labware can be engaged with the second platform from a lateral side in the first horizontal direction.

In one embodiment, a centering surface is provided on a side of the shelf facing away from the middle plane, wherein the clear width between the centering surface and the middle plane is increasing upwards. With such a design, when engaging labware with the second platform from below, it is automatically centred onto the shelf of the second platform.

In one embodiment, a slot is provided on the inside of the second platform below the shelf in the vertical direction. The slot extends parallel to the shelf and opens toward the middle plane. A drop plate of a drop guard is in the slot, slidably in the second horizontal direction, from a position below the first part of the first platform to a position below the second part of the first platform.

In one embodiment, the drop guard comprises a swivel arm that is connected with a connector to the drop plate on its first free end and that is connected to a third drive on its second free end. The drop plate comprises a slot extending in the first horizontal direction, and wherein the connector is slidably arranged in said slot. With such a design, a movement of the drop plate in the second horizontal direction can be realized by rotating the swivel arm around the driving shaft oft the third drive.

In one embodiment, the first platform is a single-piece platform. The second platform is a split platform with a first part that is arranged on the one side of the base plate in the first horizontal direction and with a second part that is arranged on the lateral opposite side thereof, wherein the first part and the second part are essentially symmetrical with respect to the first horizontal direction. Alternatively, the second platform is a fork-shaped platform with a first limb and a second limb that are interconnected by a transverse connector, wherein the first limb is arranged on the one side of the base plate in the first horizontal direction and the second limb is arranged on the lateral opposite side thereof, wherein the first limb and the second limb are essentially symmetrical with respect to the first horizontal direction and wherein the second platform opens in one direction of the second horizontal direction.

The features of the above-mentioned embodiments of the labware lift can be used in any combination within the scope of the claims, provided they do not contradict each other.

A laboratory apparatus according to the invention comprises a labware lift according to one of the previous embodiments and a shuttle with a carrier that is provided on the base plate. The carrier is movable parallel to the second horizontal direction, from a first station, in an area outside of a projection of the first platform in the vertical direction, to a second station between the base plate and the first platform or to a third station between the base plate and the first platform.

In one embodiment, the second station is located between the base plate and the first part of the first platform and the third station is located between the base plate and the second part of the first platform.

In one embodiment, the second station is closer to the first station than the third station.

In one embodiment, the laboratory apparatus further comprising a transfer unit with a motor driven X-axis and/or a motor driven Y-axis and a motor driven Z-axis that allows an alignment of a transfer unit head with the first station of the carrier of the shuttle. The transfer unit head can be a pipetting arm or a robot arm with a gripper. With the pipetting arm, liquids can be dispensed and/or aspirated to and/or from containers of labware. With the robot arm, racks for containers can be placed on the carrier of the shuttle or can be picked up therefrom or containers can be inserted into racks or can be removed therefrom.

A method for stacking labware according to the invention with the laboratory apparatus according to the invention or with the labware lift according to the invention comprises the steps of:
- Placing a first labware on the carrier of the shuttle in the first station of the carrier or
   Placing a first labware on the carrier of the shuttle in the first station of the carrier and placing a second labware on top of the first labware;
- Moving the second platform of the stack lift in the vertical direction to a position below the first labware or to a position below the second labware;
- Moving the carrier from its first station to its second station or to its third station; and
- Moving the second platform to a higher position and thereby lifting the first labware or the first labware and the second labware from the carrier or thereby lifting the second labware from the first labware.

In one embodiment, the method for stacking labware comprises the step of:
- Moving the carrier from its second station or its third station to its first station.

In one embodiment, the method for stacking labware comprises the step of:
- Moving the first platform to a lower position; and/or
- Moving the first platform to a higher position.

In one embodiment, the movement of the first platform and the second platform are coordinated in such a way that the first part of the platform abuts the second labware. This can be realized by moving one of the first platform and the second platform or by moving both platforms.

In one embodiment, the first platform and the second platform are moved simultaneously. Alternatively, they are moved non-simultaneously.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a perspective view of a laboratory apparatus with a labware lift according to the invention;
Fig. 2 a partial perspective view of a stack lift and a drop guard of the labware lift of Fig. 1;
Fig. 3 a partial front view of a labware arranged on a second platform of the stack lift; and
Fig. 4 a side view of an extended uniaxial coupling apparatus according to the invention.

### DETAILED DESCRIPTION OF THE INVENTION

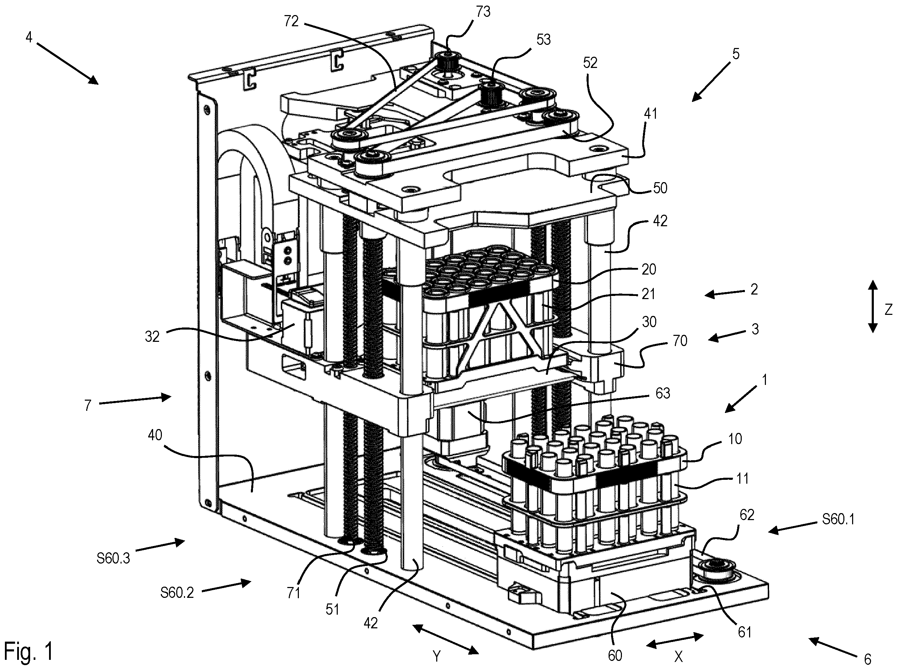

Fig. 1 shows a perspective view of a laboratory apparatus 4 with a labware lift according to the invention. The apparatus 4 comprises a base plate 40, a top plate 41 that is parallel to the base plate 40 and four lift rails 42 that connect the base plate 40 with the top plate 41. Two lift rails 42 are arranged on one side with respect to a first horizontal direction X and two lift rails 42 are arranged on the opposite side thereof. The apparatus 4 further comprises a head lift 5 with a first platform 50 that is arranged on the lift rails 42, slidably in the vertical direction Z. One first spindle 51 is arranged between the two lift rails 42 on each side of the base plate 40 in the first horizontal direction X. The first platform 50 is mounted to the two spindles 51 by means of spindle nuts, allowing a movement of the platform 50 in the vertical direction Z, when the first spindles 51 are rotated. The rotation of the two first spindles 51 is synchronized by a first belt 52 and can be effected by a first drive 53. The first belt 52 and the first drive 53 are mounted on the top plate 41. A shuttle 6 is arranged on the base plate 40. The shuttle 6 comprises a carrier 60 that is movable in a second horizontal direction Y by means of shuttle rails 61 a shuttle belt 62 and a shuttle drive 63. The second horizontal direction Y is perpendicular to the first horizontal direction X. The carrier 60 can be moved from a first station S60.1 next to a projection of the first platform 50 in the vertical direction Z to a second station S60.2 or to a third station S60.3 below the first platform 50, wherein the second station S60.2 is closer to the first station S60.1 than the third station S60.3. With the carrier 60, labware 1;2 can be moved from the first station S60.1 to the second station S60.2 or to the third station S60.3. First labware 1 comprises a first rack 10 in which first container 11 are arranged and second labware 2 comprises a second rack 20 in which second containers 21 are arranged. For example, first labware 1 are 96 Deep Well microplates or a rack with test tubes and second labware 2 are arrays of Solid Phase Extraction (SPE) columns in a rack. A stack lift 7 is provided on the base plate 40, being mounted on and moveable along the same lift rails 42 than the head lift 5. The stack lift 7 comprises a split second platform 70, wherein a first part of the second platform 70 is arranged on one side of the base plate 40 and wherein a second part of the second platform 70 is arranged on the opposite side of the base plate 40 with respect to the first horizontal direction X. In each split part of the second platform 70, a through hole for the first spindle 51 is provide between the guides for the lift rails 42. The split second platforms 70 each are mounted to one second spindle 71 by means of spindle nuts 710, allowing a movement of the second platforms 70 in the vertical direction Z, when the second spindles 71 are rotated. Each second spindle 71 is arranged between a first spindle 51 and a corresponding lift rail 42. The rotation of the two second spindles 71 is synchronized by a second belt 72 and can be effected by a second drive 73. The second belt 72 and the second drive 73 are mounted on the top plate 41. A drop guard 3 is provided on the second platform 70. The drop guard 3 comprises a drop plate 30 that is movable from a back position above the third station S60.3 of the carrier 60 to a back position above the second station of the carrier S60.2 by means of a third drive 32. The drop plate 30 is positioned as such that when a labware 1;2 is placed on the second platform 70, the drop plate 30 can be slid below the labware 1;2, preventing a contamination of the space below the drop plate 30 with substances dropping from the labware 1;2.

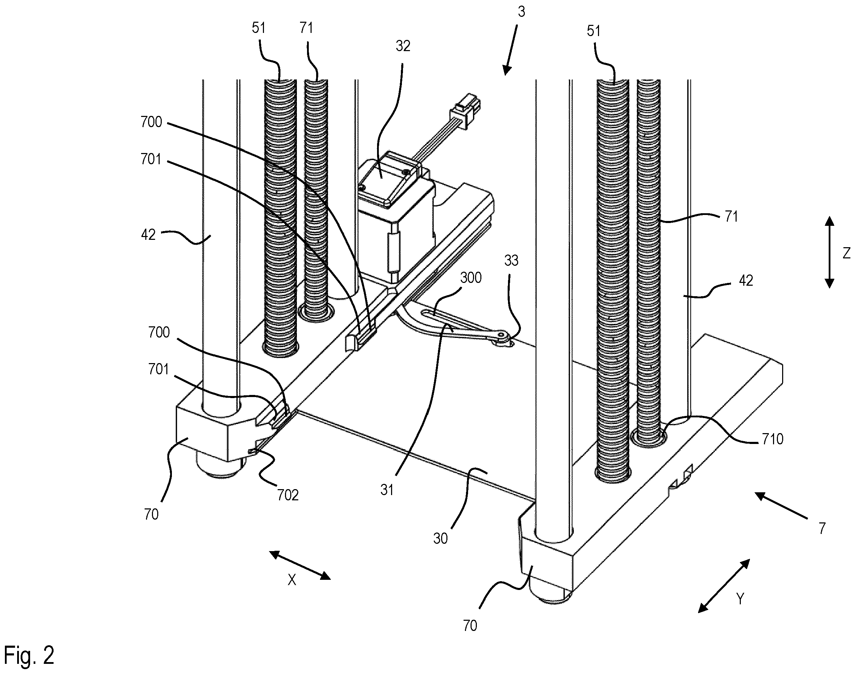

Fig. 2 shows a partial perspective view of the stack lift 7 and the drop guard 3 of the labware lift of Fig. 1. The drop plate 30 is arranged in opposing slots 702 of the two lateral parts of the second platform 70. The drop plate 30 is slidable in the second horizontal direction Y from the back position to the front position by means of the third drive 32. The third drive 32 is arranged on one lateral part of the second platform 70 and is operatively connected to the drop plate 30 by means of a swivel arm 31 and a connector 33, wherein the connector is slidably arranged in a slot 300 of the drop plate 30 and wherein the swivel arm 31 is connected to the third drive 32 on its one free end and is connected to the drop plate 30 by means of the connector 33 on its other free end. The Slot 300 extends in the first horizontal direction X in a region close to the back edge of the drop plate 30. Each part of the second platform 70 comprises two shelfs 700, each with a centering surface 701. The shelfs 700 are arranged above the slots 702 in the vertical direction Z. The outer distance between two shelfs 700 of opposing parts of the first platform 70 in the first horizontal direction X corresponds to the width of the labware and the distance between the front shelf and back shelf in the second horizontal direction Y corresponds to the depth of the labware. Alternatively, the shelfs from one part of the second platform 70 can be continuous and form a single shelf.

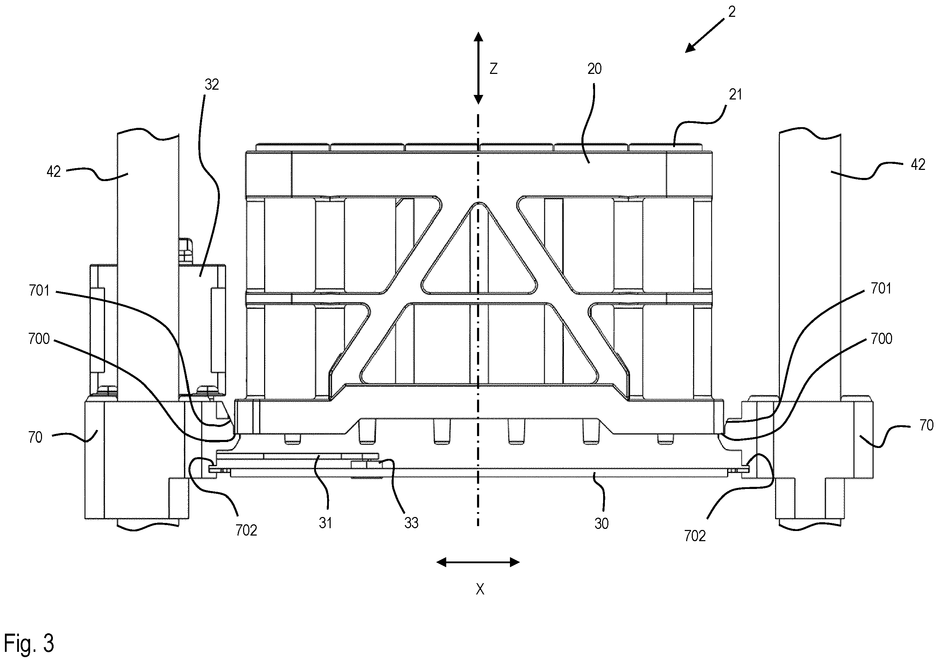

Fig. 3 shows a partial front view of a second labware 2 arranged on the second platform 70 of the stack lift 7. The second labware 2 comprises a second rack 20, in which several second containers 21 are arranged. The bottom surface of the rack 20 rests on the shelfs 700 of the second platform 70. The centering surfaces 701 fan outwards from an outer edge region of the shelfs 700.

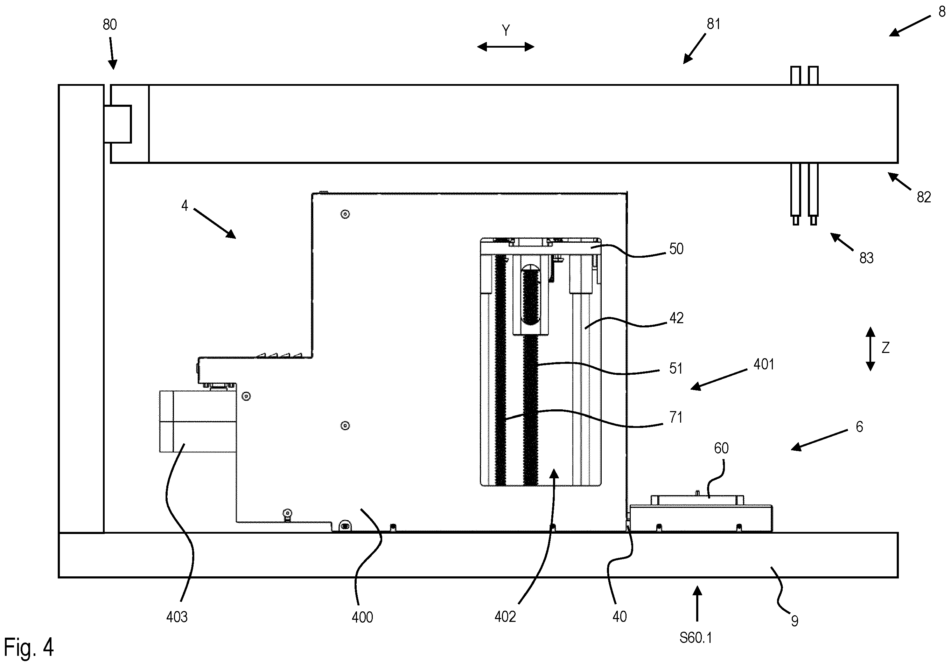

Fig. 4 shows a side view of an extended laboratory apparatus 4 according to the invention. The laboratory apparatus 4 comprises a housing 400 that encloses a part of the base plate 40, the top plate 41, the head lift 5 and the stack lift 7. The Housing 400 comprises a frontal opening 401, through which the carrier 60 of the shuttle 6 can pass in the second horizontal direction Y from an outside first station S60.1 to a second or third station inside the housing 400. Lateral windows 402 are provided on each side of the housing 400 in the first horizontal direction X. The windows 402 are see-through allowing a visual inspection of the interior of the housing 400. At the side of the housing 400 opposite the frontal opening 401, a suction connection 403 is provided which allows the extraction of gases or vapours from inside the housing 400. The apparatus 4 is arranged on a machine base 9 together with a transfer unit 8. The transfer unit 8 comprises an X-axis 80, a Y-axis 80, and a Z-axis 82, allowing the special movement of a transfer unit head 83 in a space around the apparatus 4. For example, the transfer unit head 83 is a pipetting head which enables the transfer of liquids. The transfer unit head 83 may be a gripper head for transporting the first labware 1 and/or the second labware 2 onto the carrier 60 or stacking labware onto each other on the carrier 60.

**REFERENCE SIGNS LIST**

| | | | |
|---|---|---|---|
| 1 | First labware | 61 | Shuttle rail |
| 10 | First rack | 62 | Shuttle belt |
| 11 | First container | 63 | Shuttle drive |
| 2 | Second labware | 7 | Stack lift |
| 20 | Second rack | 70 | Second platform |
| 21 | Second container | 700 | Shelf |
| 3 | Drop guard | 701 | Centering surface |
| 30 | Drop plate | 702 | Slot |
| 300 | Slot | 71 | Second spindle |
| 31 | Swivel arm | 710 | Spindle nut |
| 32 | Third drive | 72 | Second belt |
| 33 | Connector | 73 | Second drive |
| 4 | Apparatus | 8 | Transfer unit |
| 40 | Base plate | 80 | X-axis |
| 400 | Housing | 81 | Y-axis |
| 401 | Opening | 82 | Z-axis |
| 402 | Window | 83 | Transfer unit head |
| 403 | Suction connection | 9 | Machine base |
| 41 | Top plate | | |
| 42 | Lift rail | X | First horizontal direction |
| 5 | Head lift | | |
| 50 | First platform | Y | Second horizontal direction |
| 51 | First spindle | | |
| 510 | Spindle nut | Z | Vertical direction |
| 52 | First belt | | |
| 53 | First drive | S60.1 | First station |
| 6 | Shuttle | S60.2 | Second station |
| 60 | Carrier | S60.3 | Third station |

## Claims

1. A labware lift comprising a head lift (5) mounted on a base plate (40) that extends in a first horizontal direction (X) and in a second horizontal direction (Y) that is perpendicular to the first horizontal direction (X), wherein the head lift (5) comprises a first platform (50) that is movable in a vertical direction (Z) and that is guided by at least one lift rail (42), wherein the at least one lift rail (42) is mounted on one lateral side of the base plate (40) in the first horizontal direction (X), **characterised in that** the labware lift further comprising a stack lift (7) mounted on the base plate (40), wherein the stack lift (7) comprises a second platform (70) that is movable in the vertical direction (Z) between the base plate (40) and the first platform (50) and that is guided by the same at least one lift rail (42).

2. The labware lift according to claim 1, wherein at least one lift rail (42) is arranged on the one lateral side of the base plate (40) in the first horizontal direction (X) and at least one lift rail (42) is arranged on a lateral opposite side thereof.

3. The labware lift according to claim 1 or 2, wherein the head lift (5) comprises at least one first spindle (51) that is arranged on the one lateral side of the base plate (40) in the first horizontal direction (X) and that is operatively connected to a first drive (53), and wherein the stack lift (7) comprises at least one second spindle (71) that is arranged on the one lateral side of the base plate (40) in the first horizontal direction (X) and that is operatively connected to a second drive (73).

4. The labware lift according to claim 3, wherein if there are two first spindles (51), one first spindle (51) is arranged on the one lateral side of the base plate (40) in the first horizontal direction (X) and one first spindle (51) is arranged on the lateral opposite side thereof and if there are two second spindles (71), one second spindle (71) is arranged on the one lateral side of the base plate (40) in the first horizontal direction (X) and one second spindle (71) is arranged on the lateral opposite side thereof.

5. The labware lift according to claim 3 or 4, wherein a first belt (52) operatively connects all first spindles (51) to the first drive (53) and wherein a second belt (72) operatively connects all second spindles (71) to the second drive (73).

6. The labware lift according to one of claims 3 to 5, wherein the first spindle (51) and the second spindle (71) are arranged between two lift rails (42) on the one lateral side of the base plate (40) in the first horizontal direction (X) and/or on the lateral opposite side thereof.

7. The labware lift according to one of claims 1 to 6, wherein the second platform (70) comprises a shelf (700) for labware (1;2), wherein said shelf (700) extends parallel to the first horizontal direction (X) and parallel to the second horizontal direction (Y) towards a middle plane of the labware lift that is perpendicular to the first horizontal direction (X), from an inside of the second platform (70) facing the middle plane.

8. The labware lift according to claim 7, wherein a slot (702) is provided on the inside of the second platform (70) below the shelf (700) in the vertical direction (Z), wherein the slot (702) extends parallel to the shelf (700) and opens toward the middle plane, and wherein a drop plate (30) of a drop guard (3) is arranged in the slot (702), slidably in the second horizontal direction (Y), from a position below the first part of the first platform (50) to a position below the second part of the first platform (50) .

9. The labware lift according to claim 8, wherein the drop guard (3) comprises a swivel arm (31) that is connected with a connector (33) to the drop plate (30) on its first free end and that is connected to a third drive (32) on its second free end, wherein the drop plate (30) comprises a slot (300) extending in the first horizontal direction (X), and wherein the connector is slidably arranged in said slot (300).

10. The labware lift according to one of claims 1 to 9, wherein the first platform (50) is a single-piece platform and wherein the second platform (70) is a split platform with a first part that is arranged on the one side of the base plate (40) in the first horizontal direction (X) and with a second part that is arranged on the lateral opposite side thereof, and wherein the first part and the second part are essentially symmetrical with respect to the first horizontal direction (X) or
wherein the second platform (70) is a fork-shaped platform with a first limb and a second limb that are interconnected by a transverse connector, wherein the first limb is arranged on the one side of the base plate (40) in the first horizontal direction (X) and the second limb is arranged on the lateral opposite side thereof, wherein the first limb and the second limb are essentially symmetrical with respect to the first horizontal direction (X), and wherein the second platform (70) opens in one direction of the second horizontal direction (Y).

11. A laboratory apparatus (4) comprising a labware lift according to one of claims 1 to 10 and a shuttle (6) with a carrier (60) that is provided on the base plate (40), wherein the carrier (60) is movable parallel to the second horizontal direction (Y), from a first station (S60.1), in an area outside of a projection of the first platform (50) in the vertical direction (Z), to a second station (S60.2) or to a third station (S60.3) between the base plate (40) and the first platform (50).

12. The laboratory apparatus (4) according to claim 11, wherein the laboratory apparatus (4) further comprising a transfer unit (8) with a motor driven X-axis (80) and/or a motor driven Y-axis (81) and a motor driven Z-axis (82) that allows an alignment of a transfer unit head (83) with the first station (S60.1) of the carrier (60) of the shuttle (6).

13. A method for stacking labware (1;2) with the laboratory apparatus (4) according to claim 11 or 12 with the labware lift according to one of claims 1 to 10, the method comprising the steps of:
- Placing a first labware (1) on the carrier (60) of the shuttle (6) in the first station (S60.1) of the carrier (60) or
Placing a first labware (1) on the carrier (60) of the shuttle (6) in the first station (S60.1) of the carrier (60) and placing a second labware (2) on top of the first labware (1);
- Moving the second platform (70) of the stack lift (7) in the vertical direction (Z) to a position below the first labware (1) or to a position below the second labware (2);
- Moving the carrier (60) from its first station (S60.1) to its second station (S60.2) or to its third station (S60.3); and
- Moving the second platform (70) to a higher position and thereby lifting the first labware (1) or the first labware (1) and the second labware (2) from the carrier (60) or thereby lifting the second labware (2) from the first labware (1).

14. The method for stacking labware (1;2) according to claim 13 comprising the step of:
- - moving the first platform (50) and/or the second platform (70) until the first part of the first platform (50) abuts the second labware (2).

15. The method for stacking labware (1;2) according to claim 13 or 14, wherein the first platform (50) and the second platform (70) are moved simultaneously or non-simultaneously.
